# EUROPEAN PATENT SPECIFICATION

(11) **EP 3 647 401 B1**
(45) Date of publication and mention of the grant of the patent: **08.07.2026**
(21) Application number: 18020570.0
(22) Date of filing: 02.11.2018
(51) Int. Cl.: C12G 3/024, C12H 6/02

(54) **MIXTURE OF STRAWBERRIES AND CHERRIES SPIRITS AND PRODUCTION METHOD THEREOF**
MISCHUNG AUS ERDBEER- UND KIRSCHSPIRITUOSEN UND HERSTELLUNGSVERFAHREN DAFÜR
MÉLANGE DE SPIRITUEUX DE CERISES ET DE FRAISES ET SON PROCÉDÉ DE PRODUCTION

(43) Date of publication of application: 06.05.2020
(73) Proprietor: R.G.C.C. Holdings AG, 6301 Zug (CH)
(72) Inventor: Papasotiriou, Ioannis, 53070 Filotas (GR)
(74) Representative: Schmitz, Joseph

(56) References cited:
- EP-A1- 2 735 236
- EP-A1- 3 564 353
- DE-A1- 102004 020 674
- FR-A1- 2 790 481
- RU-A- 2007 108 703

## Description

Strawberries' scientific name is *Fragaria ananassa* and belong to the *Rosaceae* family. They are not actually a true berry, but rather a greatly enlarged stem end of the plant's flower. There are hundreds of varieties of strawberries, each displaying unique attributes, including flavor profiles, resistance to disease, size, shape and even colouring. The three main types of modern commercially grown strawberry cultivars are: June-bearing, Ever-bearing and Day-neutral. June-bearing strawberries are harvested in June, Ever-bearing strawberries thrive in hotter climates, while Day-neutral strawberries do not respond to day length, rather they flower and fruit for about five months.

Strawberries are bright red in colour, have a juicy texture, a characteristic aroma, and a sweet flavor. Being an excellent source of vitamin C and manganese, strawberries also contain decent amounts of folate (B9) and potassium. Plenty of studies confirm that strawberries are very rich in antioxidants and other plant compounds and may be beneficial for heart health and blood sugar control. Their main content is water (91%) and carbohydrates (7.7%) as well as minor amounts of fat (0.3%) and protein (0.7%).

Cherry, any of various trees, belonging to the genus *Prunus* and their edible fruits. Commercial production includes sour cherries (*Prunus cerasus* ), which are frozen or canned and used in sauces and pastries, and sweet cherries (*P*. *avium* )*,* which are usually consumed fresh and are the principal type preserved in true or imitation maraschino liqueur.

Three types of cherries are mainly grown for their fruit: sweet cherries, sour cherries, and, grown to a much smaller extent, the dukes, which are crosses of sweet and sour cherries. Sweet cherry trees are large and rather upright, attaining heights up to 11 metres (36 feet). The fruit is a fleshy drupe (stone fruit) that is generally heart-shaped to nearly globular, about 2 cm (1 inch) in diameter, and varies in colour from yellow through red to nearly black. The acid content of the sweet cherry is low. The higher acid content of the sour cherry produces its characteristic tart flavour. Sour cherry trees are smaller, rarely over 5 metres (16 feet) in height. The fruit is round to oblate in shape, is generally dark red in colour, and has so much acid that it is not appealing for eating fresh.

Cherries are a major source of fibers, vitamins and minerals, including potassium, calcium, vitamin A and folic acid. They are also well known for their antioxidant properties. Antioxidants are vital for health as they protect our cells from damage caused by oxidants, or free radicals. Cherries contain antioxidants known as anthocyanins and cyanidin which may have antiinflammatory effects and initial research has shown that these antioxidants could be beneficial in inflammatory conditions such as arthritis.
DE102004 020674 A1 discloses a method of manufacturing an alcoholic spirit with *Saccharomyces cerevisiae* by fermenting berries and cherries, but is silent on *Saccharomyces cerevisiae galactose.*
EP 3 564 353 A1 discloses spirits of strawberries and their method of manufacturing, but is silent on spirits of strawberries and cherries.
It is an object of the present invention to provide a method for making a strawberry and cherry brandy using the fermentation process of strawberries and cherries as recited in the claims, as well as a strawberry and cherry brandy obtained according to such method.

Mixture of strawberries and cherries spirits based on the special process of fermentation which create these unique products. Among their ingredients, they are found to contain a high sugar content of strawberries 4.9% and cherries 12.82 %, making them suitable for alcoholic fermentation process.

Alcoholic fermentation is the anaerobic process of converting sugars into alcohol with the use of a fungus. Fermentation occurs in fruit containing sugars, such as grapes, strawberries, cherries etc.

The fermentation process begins with the washing and disinfection of the strawberries and cherries, their pulping and their mixing in equal quantities.

Disinfected and sterilized tanks are filled with the pulp and the fungus is added. The fungus used is *Saccharomyces cerevisiae galactose.* The quantity of the fungus added is 0.8 g/L and it is diluted with a mixture of water and pulp, in equal quantities, ten times its volume. The water/pulp mixture is heated to a temperature 35-40 °C, preferably at 37 °C and the proper quantity of the fungus is added. Following the dilution of the fungus, the final mixture is cooled to room temperature and has a maximum temperature difference of 10 degrees Celsius from the pulp inside the tanks.

After reaching the appropriate temperature, the final mixture is added to the tank under continuous stirring. Due to intense CO2 emission, the first two days, the tanks remain open, while the rest 8 days of the fermentation, they are sealed only to be opened once a day in order to be stirred and they are re-sealed. Fermentation is achieved under anaerobic conditions, except the first 2 days, and the temperature inside the tank varies between 16 to 25 °C, while the pH of the strawberry must is 3-4. During or more commonly after fermentation, blossoming might occur and it is treated with addition of metabisulfit salt in concentration 240 mg/L.

Once fermentation is completed, triple distillation of the strawberry and cherries must take place in temperatures between 76- 92 °C for the production of strawberry and cherries distillate. The distillates' alcohol concentration is greater than 37.5 %. It leaves a fruity aroma, whose maximum concentration in methanol is 1000 g in 100L alcohol and concentration in volatile compounds is greater than or equal to 200g in 100L alcohol.

Strawberry and cherry brandy is produced by mixing the first distillate of the strawberry and cherry must and strawberry and cherry must in 1.5:1 ratio, 76-92 °C and re-distillation of this mixture at 76-86 °C.

Strawberry and cherry brandy contains above 36% alcohol by volume, maximum methanol concentration 200 g in 100 L alcohol and concentration in volatile compounds is greater than or equal to 125 g in 100 L alcohol.

An alcoholic strawberry and cherry spirit is produced by mixing strawberry and cherry distillate and strawberry and cherry brandy in any ratio, preferably in 1:3 ratio. This product contains above 36% alcohol by volume, whose maximum concentration in methanol is 1000 g in 100L alcohol and concentration in volatile compounds is greater than or equal to 200g in 100L alcohol. Strawberry and cherry distillate and strawberry and cherry brandy can be mixed separately with any other alcoholic drink for cocktail preparation.

## Claims

1. A method for making a strawberry and cherry brandy using the fermentation process of strawberries and cherries, after they are washed, pulped and mixed in equal quantities, with the addition of Saccharomyces *cerevisiae galactose* fungus in a quantity of 0.8 g/L.

2. The method according to claim 1, wherein the fungus *Saccharomyces cerevisiae galactose* is diluted with a mixture of water and pulp, in equal quantities, ten times its volume, and where the water/pulp mixture is heated to a temperature 35-40 °C, preferably at 37 °C and the proper quantity of the fungus is added, and where following the dilution of the fungus, the final mixture is cooled to room temperature and has a maximum temperature difference of 10 °C from the pulp inside the tanks, and where after reaching the appropriate temperature, the final mixture is added to the tank under continuous stirring.

3. The method according to claim 2, wherein the strawberry and cherry must is added in sterilized tanks in which due to intense CO2 emission, the first two days, the tanks remain open, while the rest 8 days of the fermentation, they are sealed only to be opened once a day in order to be stirred and they are re-sealed, and where fermentation is achieved under anaerobic conditions, except the first 2 days, and the temperature inside the tank varies between 16 to 25 °C, while the pH of the strawberry and cherry must is 3-4.

4. The method according to claim 3, wherein during or more commonly after fermentation, blossoming might occur and it is treated with addition of metabisulfite salt in concentration 240 mg/L.

5. The method according to claim 3 or 4, by triple distillation of the strawberry and cherry must at 76-92 °C, once fermentation is completed.

6. A strawberry and cherry brandy obtained by the method according to claim 5, which contains alcohol by volume above 37.5% whose maximum concentration in methanol is 1000 g in 100L alcohol and concentration in volatile compounds is greater than or equal to 200 g in 100L alcohol.

## Patentansprüche

1. Verfahren zur Herstellung eines Erdbeer- und Kirschbrands unter Verwendung des Fermentationsprozesses von Erdbeeren und Kirschen, nachdem diese gewaschen, entkernt und in gleichen Mengen vermischt wurden, unter Zugabe des Hefepilzes *Saccharomyces cerevisiae galactose* in einer Menge von 0,8 g/l.

2. Verfahren nach Anspruch 1, wobei der *Saccharomyces cerevisiae galaktose* Hefepilz mit einer Mischung aus Wasser und Fruchtfleisch in gleichen Mengen im Zehnfachen seines Volumens verdünnt wird, wobei die Wasser-Fruchtfleisch-Mischung auf eine Temperatur von 35-40 °C, vorzugsweise 37 °C, erhitzt und die richtige Menge des Hefepilzes zugegeben wird, und wobei nach der Verdünnung des Hefepilzes die Endmischung auf Raumtemperatur abgekühlt wird und eine maximale Temperaturdifferenz von 10 °C zum Fruchtfleisch in den Tanks aufweist, und wobei nach Erreichen der geeigneten Temperatur die Endmischung unter ständigem Rühren in den Tank gegeben wird.

3. Verfahren nach Anspruch 2, wobei der Erdbeer- und Kirschmost in sterilisierte Tanks gegeben wird, in denen aufgrund intensiver CO₂-Emissionen in den ersten beiden Tagen die Tanks offen bleiben, während sie in den restlichen 8 Tagen der Gärung verschlossen sind, nur einmal täglich zum Umrühren geöffnet und wieder verschlossen werden, und wobei die Gärung unter anaeroben Bedingungen erfolgt, mit Ausnahme der ersten 2 Tage, und die Temperatur im Tank zwischen 16 und 25 °C schwankt, während der pH-Wert der Erdbeer- und Kirschmost bei 3-4 liegt.

4. Verfahren nach Anspruch 3, wobei während oder häufiger nach der Gärung eine Blüte auftreten kann, die durch Zugabe von Metabisulfitsalz in einer Konzentration von 240 mg/l behandelt wird.

5. Verfahren nach Anspruch 3 oder 4, durch dreifache Destillation des Erdbeer- und Kirschmosts bei 76-92 °C, sobald die Gärung abgeschlossen ist.

6. Ein Erdbeer- und Kirschbrand, der nach dem Verfahren gemäß Anspruch 5 gewonnen wird und einen Alkoholgehalt von über 37,5 % vol aufweist, wobei die maximale Methanolkonzentration 1000 g pro 100 l Alkohol beträgt und die Konzentration an flüchtigen Verbindungen größer oder gleich 200 g pro 100 l Alkohol ist.

## Revendications

1. Un procédé de fabrication d'une eau-de-vie de fraises et de cerises par fermentation de fraises et de cerises, après qu'elles ont été lavées, réduites en purée et mélangées en quantités égales, avec l'ajout de la levure *Saccharomyces cerevisiae galactose* à raison de 0,8 g/L.

2. Le procédé selon la revendication 1, dans lequel la levure *Saccharomyces cerevisiae galactose* est diluée avec un mélange d'eau et de pulpe, en quantités égales, à raison de dix fois son volume, et dans lequel le mélange eau/pulpe est chauffé à une température de 35 à 40 °C, de préférence à 37 °C, et la quantité appropriée de levure est ajoutée, et dans lequel, après la dilution de la levure, le mélange final est refroidi à température ambiante et présente une différence de température maximale de 10 °C par rapport à la pulpe à l'intérieur des cuves, et où, après avoir atteint la température appropriée, le mélange final est ajouté à la cuve sous agitation continue.

3. Le procédé selon la revendication 2, dans lequel le moût de fraise et de cerise est ajouté dans des cuves stérilisées dans lesquelles, en raison d'émissions intenses de CO₂, les deux premiers jours, les cuves restent ouvertes, tandis que pendant les 8 jours restants de la fermentation, elles sont scellées pour n'être ouvertes qu'une fois par jour afin d'être remuées, puis rescellées, et dans lequel la fermentation s'effectue dans des conditions anaérobies, à l'exception des deux premiers jours, et la température à l'intérieur de la cuve varie entre 16 et 25 °C, tandis que le pH du moût de fraises et de cerises est compris entre 3 et 4.

4. Le procédé selon la revendication 3, dans lequel, pendant ou plus couramment après la fermentation, un blanchiment peut se produire et est traité par l'ajout de sel de métabisulfite à une concentration de 240 mg/L.

5. Le procédé selon la revendication 3 ou 4, par triple distillation du moût de fraises et de cerises à une température comprise entre 76 et 92 °C, une fois la fermentation terminée.

6. Une eau-de-vie de fraise et de cerise obtenue par le procédé selon la revendication 5, qui contient un volume d'alcool supérieur à 37,5 %, dont la concentration maximale en méthanol est de 1 000 g pour 100 L d'alcool et la concentration en composés volatils est supérieure ou égale à 200 g pour 100 L d'alcool.
